# EUROPEAN PATENT APPLICATION

(11) **EP 4 708 140 A1**
(43) Date of publication of application: **11.03.2026**
(21) Application number: 24214877.3
(22) Date of filing: 22.11.2024
(51) Int. Cl.: G06N 3/0475, G06V 10/82, G06N 3/044, G06N 3/045, G06N 3/0455, G06N 3/084, G06N 20/00, G06V 10/80

(54) **TARGET MODEL TRAINING METHOD, MULTIMODAL DATA PROCESSING METHOD, AND APPARATUSES AND DEVICES THEREFOR**

(30) Priority: 06.09.2024 CN 202411252563
(71) Applicant: Beijing Baidu Netcom Science Technology Co., Ltd., Beijing 100085 (CN)
(72) Inventor: XU, Xue, BEIJING 100085 (CN); DU, Hao, BEIJING 100085 (CN); YANG, Jie, BEIJING 100085 (CN); LIU, Jiachen, BEIJING 100085 (CN); XIAO, Xinyan, BEIJING 100085 (CN); WU, Hua, BEIJING 100085 (CN)
(74) Representative: Bringer IP

(57) **Abstract**

The present disclosure provides a target model training method, a multimodal data processing method, and apparatuses and devices therefor, relating to the field of artificial intelligence technology, and in particular to the fields of computer vision, deep learning, large model and other technologies. The target model training method includes: inputting (S101) sample data into a preset model to obtain initial multimodal features of the sample data; and using (S102) the initial multimodal features and a preset noise feature to perform model training on N diffusion networks in the preset model to obtain a target model when parameters of an image-text encoder of the preset model are fixed.

## Description

### TECHNICAL FIELD

The present disclosure relates to the field of artificial intelligence technology and in particular to the fields of computer vision, deep learning, large model and other technologies, and is applied to Artificial Intelligence Generated Content (AIGC) and other scenarios.

### BACKGROUND

Text to Image (T2I) diffusion models have made significant progress in recent years, and this model technology has demonstrated the impressive capability in generating a high-fidelity image from the text description. Through continuous innovation in deep learning and artificial intelligence technologies, the existing model technologies are able to transform the simple text description into a detailed and realistic image. This transformation not only provides a powerful tool for creative workers, but also brings an unprecedented visual experience to users.

### SUMMARY

The present disclosure provides a target model training method, a multimodal data processing method, and apparatuses and devices therefor.

According to an aspect of the present disclosure, provided is a target model training method, including:
inputting sample data into a preset model to obtain initial multimodal features of the sample data; where the sample data at least includes a sample text and at least one entity image, the sample text includes at least one entity text, and the entity image is an image corresponding to the entity text; the initial multimodal features include an image feature of the entity image and a text feature of the entity text, and the image feature of the entity image is behind the text feature of the entity text corresponding to the entity image; and
using the initial multimodal features and a preset noise feature to perform model training on N diffusion networks in the preset model to obtain a target model when parameters of an image-text encoder of the preset model are fixed, where N is a positive integer.

According to another aspect of the present disclosure, provided is a multimodal data processing method, including:
inputting multimodal prompt information into a pre-trained target model to obtain target multimodal features of the multimodal prompt information, where the multimodal prompt information at least includes a target text and at least one target entity image, the target text includes at least one target entity text, and the target entity image is an image corresponding to the target entity text; the target multimodal features include an image feature of the target entity image and a text feature of the target entity text, and the image feature of the target entity image is behind the text feature of the target entity text corresponding to the target entity image; and
using N target diffusion networks in the target model to perform feature diffusion on the target multimodal features to obtain a target inference result including an image and/or a text associated with the multimodal prompt information; where N is a positive integer.

According to another aspect of the present disclosure, provided is a target model training apparatus, including:
a training unit configured to input sample data into a preset model to obtain initial multimodal features of the sample data; where the sample data at least includes a sample text and at least one entity image, the sample text includes at least one entity text, and the entity image is an image corresponding to the entity text; the initial multimodal features include an image feature of the entity image and a text feature of the entity text, and the image feature of the entity image is behind the text feature of the entity text corresponding to the entity image; and use the initial multimodal features and a preset noise feature to perform model training on N diffusion networks in the preset model to obtain a target model when parameters of an image-text encoder of the preset model are fixed, where N is a positive integer;
a storage unit configured to output the target model.

According to another aspect of the present disclosure, provided is a multimodal data processing apparatus, including:
an inference unit configured to input multimodal prompt information into a pre-trained target model to obtain target multimodal features of the multimodal prompt information, where the multimodal prompt information at least includes a target text and at least one target entity image, the target text includes at least one target entity text, and the target entity image is an image corresponding to the target entity text; the target multimodal features include an image feature of the target entity image and a text feature of the target entity text, and the image feature of the target entity image is behind the text feature of the target entity text corresponding to the target entity image; and use N target diffusion networks in the target model to perform feature diffusion on the target multimodal features to obtain a target inference result including an image and/or a text associated with the multimodal prompt information; where N is a positive integer; and
an output unit configured to output the target inference result.

According to yet another aspect of the present disclosure, provided is an electronic device, including:
at least one processor; and
a memory connected in communication with the at least one processor;
where the memory stores an instruction executable by the at least one processor, and the instruction, when executed by the at least one processor, enables the at least one processor to execute the method of any embodiment of the present disclosure.

According to yet another aspect of the present disclosure, provided is a non-transitory computer-readable storage medium storing a computer instruction thereon, and the computer instruction is used to cause a computer to execute the method according to any one of the embodiments of the present disclosure.

According to yet another aspect of the present disclosure, provided is a computer program product including a computer program, and the computer program implements the method according to any one of the embodiments of the present disclosure, when executed by a processor.

In this way, the solution of the present disclosure utilizes the generated initial multimodal features and the preset noise feature to train the N diffusion networks in the preset model, so that the target model obtained after training can process the multimodal information, enriching the use scenarios of the model and also effectively improving the ability of the model to control details, providing strong support for improving the controllability of image generation.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

The accompanying drawings are used to better understand the present solution, and do not constitute a limitation to the present disclosure.
FIG. 1 is a first schematic flowchart of a model training method according to an embodiment of the present application;
FIG. 2 is a first schematic diagram of initial multimodal features according to an embodiment of the present application;
FIG. 3(a) is a structural schematic diagram of a diffusion network according to an embodiment of the present application;
FIG. 3(b) is a schematic diagram of diffusion networks connected in series according to an embodiment of the present application;
FIG. 4 is a second schematic flowchart of a model training method according to an embodiment of the present application;
FIG. 5(a) is a second schematic diagram of initial multimodal features according to an embodiment of the present application;
FIG. 5(b) is a schematic diagram of instruction information according to an embodiment of the present application;
FIG. 6(a) is a third schematic flowchart of a model training method according to an embodiment of the present application;
FIG. 6(b) is a third schematic diagram of initial multimodal features according to an embodiment of the present application;
FIG. 6(c) is a scenario schematic diagram of the model training method in a specific example according to an embodiment of the present application;
FIG. 7(a) is a structural schematic diagram of a dual information flow diffusion network according to another embodiment of the present application;
FIG. 7(b) is a schematic diagram of dual information flow diffusion networks connected in series according to another embodiment of the present application;
FIG. 8 is a first schematic flowchart of a multimodal data processing method according to an embodiment of the present application;
FIG. 9 is a second schematic flowchart of a multimodal data processing method according to an embodiment of the present application;
FIG. 10 is a schematic diagram of an application flow of the multimodal data processing method in a specific example according to an embodiment of the present application;
FIG. 11 is a structural schematic diagram of a model training apparatus according to an embodiment of the present application;
FIG. 12 is a structural schematic diagram of a multimodal data processing apparatus according to an embodiment of the present application; and
FIG. 13 is a block diagram of an electronic device used to implement the model training method or multimodal data processing method according to an embodiment of the present disclosure.

### DETAILED DESCRIPTION

Hereinafter, descriptions to exemplary embodiments of the present disclosure are made with reference to the accompanying drawings, include various details of the embodiments of the present disclosure to facilitate understanding, and should be considered as merely exemplary. Therefore, those having ordinary skill in the art should realize, various changes and modifications may be made to the embodiments described herein, without departing from the scope of the present disclosure. Likewise, for clarity and conciseness, descriptions of well-known functions and structures are omitted in the following descriptions.

The term "and/or" herein only describes an association relation of associated objects, which indicates that there may be three kinds of relations, for example, A and/or B may indicate that only A exists, or both A and B exist, or only B exists. The term "at least one" herein indicates any one of many items, or any combination of at least two of the many items, for example, at least one of A, B or C may indicate any one or more elements selected from a set of A, B and C. The terms "first" and "second" herein indicate a plurality of similar technical terms and distinguish them from each other, but do not limit an order of them or limit that there are only two items, for example, a first feature and a second feature indicate two types of features/two features, a quantity of the first feature may be one or more, and a quantity of the second feature may also be one or more.

In addition, in order to better illustrate the present disclosure, numerous specific details are given in the following specific implementations. Those having ordinary skill in the art should understand that the present disclosure may be performed without certain specific details. In some examples, methods, means, elements and circuits well known to those having ordinary skill in the art are not described in detail, in order to highlight the subject matter of the present disclosure.

The related technologies of the embodiments of the present disclosure will be illustrated below. The following related technologies are optional solutions that can be arbitrarily combined with the technical solutions of the embodiments of the present disclosure, and all belong to the protection scope of the embodiments of the present disclosure.

Text to Image (T2I) diffusion models have made significant progress in recent years, and this model technology has demonstrated the impressive capability in generating a high-fidelity image from the text description. The existing T2I diffusion model can intelligently generate a highly relevant image based on the text prompt provided by a user. The emergence of these methods has greatly enriched the ways of visual expression, making the conversion from text to image more direct and efficient. This transformation not only provides a powerful tool for creative workers, but also brings an unprecedented visual experience to users.

Although these methods have achieved remarkable achievements in image generation, they still face a fundamental challenge. This challenge stems from the inherent simplicity of text description. When trying to use a short text to describe a scenario with complex details, specific entities or nuanced details, it is often found that the generated image may be unable to fully capture all the details and essence of the original description due to limitations of language in expression.

To overcome the challenge and further improve the controllability of image generation, the solution of the present disclosure provides a new method, namely, inputting a universal visual language (VL) to faithfully generate an image. Here, the universal visual language may include richer descriptive information, such as product images, photos, sketches, etc., which can provide more context and detailed guidance for the image generation model. With the method, the content and style of the generated image can be more precisely controlled, thus meeting the user's higher customization requirement.

Here, before the solution of the present disclosure is illustrated in detail, some concepts that may be involved in model training are briefly introduced.

Finetune: given a model to be trained, finetune is performed based on this model. Compared with training the model from scratch, finetune can save a lot of computing resources and computing time, and can improve computing efficiency and accuracy.

Latent space: a representation method for image compression to extract important features and remove unimportant features from an image.

Part 1: Detailed description of the model training method:
The solution of the present disclosure proposes a model training method for multimodal information, so that the model can have the ability to process the multimodal information, to improve the controllability of the model in image generation, and thus effectively improve the user experience.

It should be noted that the preset model in the solution of the present disclosure is a model based on MMDiT (Multimodal Diffusion Transformer, or MultiModal-DiT for short) architecture. Compared with a model based on a U-network (U-Net) architecture, the solution of the present disclosure can not only support text-to-image tasks, but also support multimodal tasks (tasks of generating text and/or image based on input multimodal information), thus improving the application capability of the model in various scenarios.

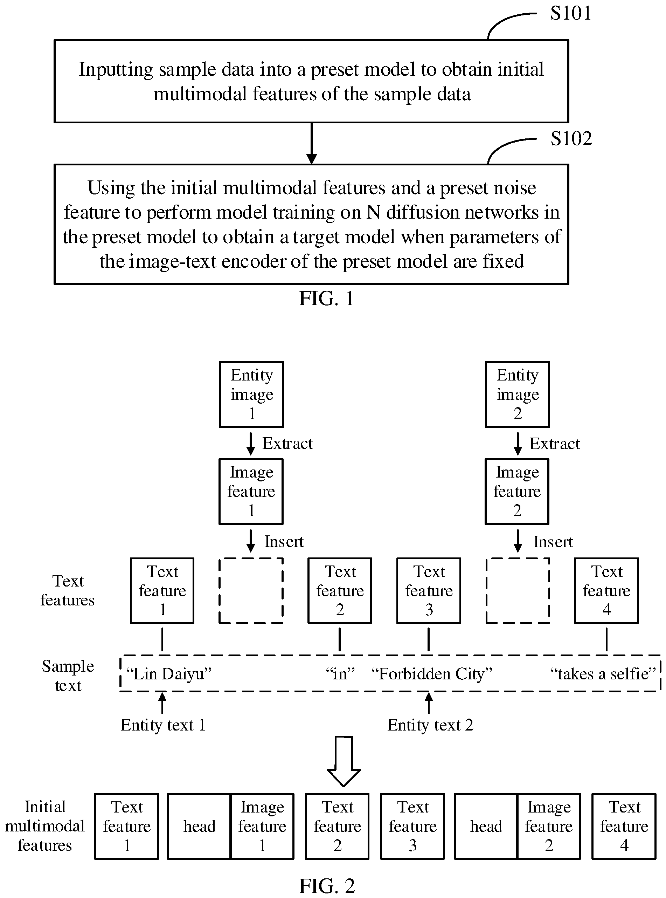

Specifically, FIG. 1 is a first schematic flowchart of a model training method according to an embodiment of the present application. The method is optionally applied to electronic devices, such as personal computers, servers, server clusters and other electronic devices.

Further, the method includes at least a part of the following content. As shown in FIG. 1, the method includes the following steps.

Step S101: Sample data is input into a preset model to obtain initial multimodal features of the sample data.

For example, in an example, an image-text encoder in the preset model may be used to obtain the initial multimodal features of the sample data.

Here, in an example, the sample data at least includes a sample text and at least one entity image (may be denoted as M1 entity images for the convenience of subsequent description). Further, the sample text also includes at least one entity text (may be denoted as M2 entity texts for the convenience of subsequent description). Here, the entity image is an image corresponding to the entity text.

Here, M1 and M2 are positive integers greater than or equal to 1. Further, in an example, values of M1 and M2 may be different, for example, M1 is less than M2, which case may correspond to a scenario where not all sample texts correspond to one entity image. Alternatively, in another example, the values of M1 and M2 are the same, which case may correspond to a scenario where one entity text corresponds to one entity image.

Here, it should be noted that a relationship between the entity texts and the entity images may be one-to-one or one-to-many, which is not limited in the solution of the present disclosure. Accordingly, the values of M1 and M2 are not limited in the solution of the present disclosure either.

Further, in an example, the initial multimodal features include an image feature of the entity image and a text feature of the entity text, where the image feature of the entity image is behind the text feature of the entity text corresponding to the entity image; in other words, the initial multimodal features are at least obtained by inserting the image feature of the entity image after the text feature of the entity text corresponding to the entity image in this example.

Step S102: The initial multimodal features and a preset noise feature are used to perform model training (for example, finetune) on N diffusion networks in the preset model to obtain a target model when parameters of the image-text encoder of the preset model are fixed. For example, the target model including at least N target diffusion networks is obtained.

Here, the target model can infer, based on the input multimodal prompt information, a target inference result including an image and/or a text associated with the multimodal prompt information.

Further, N is a positive integer greater than or equal to 1.

It should be noted that the training method in the solution of the present disclosure can be mainly applied to the scenario of training the diffusion network. At this time, step S101 may be specifically: inputting the sample data required for the current step into the preset model, to use the image-text encoder in the preset model to obtain the initial multimodal features of the sample data used in the current step. Accordingly, step S102 may be specifically: using the initial multimodal features and the preset noise feature required for the current step to perform model training on the N diffusion networks in the preset model, to complete training in the current step.

Here, the "current step" may be any step in the total number of steps (also called the preset number of steps) required to train the diffusion networks (or called the diffusion model). In other words, the solution of the present disclosure can be applied to any step of training the diffusion networks.

Further, it should be noted that the "step" here is a concept in a diffusion network training process, and may refer to a discrete time point (or discrete step) experienced in the processes of converting original data from an original state to a noisy state (called a forward process, for example, the model gradually adds noise to data in the forward process, the forward process may be divided into multiple discrete steps, and a certain amount of noise may be added to the data in each step) and recovering from the noisy state to the original state (or original data) (a reverse process, for example, the model may try to gradually remove noise to restore to the original data in the reverse process, and the reverse process may also be divided into multiple steps).

In this way, the solution of the present disclosure utilizes the generated initial multimodal features and the preset noise feature to train the N diffusion networks in the preset model, so that the target model obtained after training can process the multimodal information, enriching the use scenarios of the model and also effectively improving the ability of the model to control details, and providing strong support for improving the controllability of image generation.

In addition, since the solution of the present disclosure makes full use of the multimodal features of mixed image and text input, that is, makes full use of the universal visual language, the expressed features have richer descriptive information, and the descriptive information can provide more context and detailed guidance for inference, such as image generation, thereby further meeting the user's higher inference requirement. At the same time, the descriptive information can also enable the trained model to have the multi-entity processing capability and multi-entity generation capability, thereby further enhancing the user experience.

Here, in an example, the preset model described above may be a generative model, and for example, may be specifically an image generation model, etc., which is not specifically limited in the solution of the present disclosure.

It should be noted that, when the sample data is specifically a sample text including a plurality of entity texts and a plurality of entity images and each entity text has a corresponding entity image, the initial multimodal features may, based on the normal browsing order of texts in the sample text, be expressed as: [text feature of subtext 1 (which may be understood as non-entity text) in sample text, text feature of entity text 1, image feature of entity image corresponding to entity text 1; text feature of subtext 2 (which may be understood as non-entity text) in sample text, text feature of entity text 2, image feature of entity image corresponding to entity text 2; ...]. It can be understood that the above feature representation is only an exemplary description. In practical applications, specific positions of the text features of the non-entity texts and the text features of the entity texts in the initial multimodal features may be determined based on positions of the non-entity texts and the entity texts in the sample text.

For example, as shown in FIG. 2, the sample data includes a sample text of "Lin Daiyu takes a selfie in the Forbidden City", the entity texts included in the sample text are "Lin Daiyu" (denoted as entity text 1) and "Forbidden City" (denoted as entity text 2), and the non-entity texts included in the sample text are "in" and "takes a selfie"; and further, the sample data also includes an entity image 1 corresponding to "Lin Daiyu" (i.e., entity text 1), and an entity image 2 corresponding to "Forbidden City" (i.e., entity text 2). At this time, the image feature 1 extracted from the entity image 1 may be inserted after the text feature 1 of "Lin Daiyu", and the image feature 2 extracted from the entity image 2 may be inserted after the text feature 3 of "Forbidden City", to obtain the initial multimodal features expressed as follows:

[text feature 1 of "Lin Daiyu", image feature 1 of entity image 1 corresponding to "Lin Daiyu"; text feature 2 of "in"; text feature 3 of "Forbidden City", image feature 2 of entity image 2 corresponding to "Forbidden City"; text feature 4 of "takes a selfie"].

In this way, information of different modalities can be aligned based on the image-text alignment strategy described above, realizing the feature representation of mixed images and texts, and providing strong support for subsequent improvement of the controllability of image generation.

It should be noted that, in the above example, in order to distinguish the text feature from the image feature in the initial multimodal features more clearly, the solution of the present disclosure may also set a header field (head) before the inserted image feature (such as the head). For example, taking the example shown in FIG. 2 for example, a header field (head) may be concatenated before the image feature 1, and a header field (head) may be concatenated before the image feature 2, so as to distinguish the text feature from the image feature in the initial multimodal features, and thus provide strong support for further improving the controllability of image generation and improving the inference effect of the model.

Further, in a specific example, the feature expression of the image feature of the entity image obtained by using the image-text encoder includes at least one of: a position feature of the entity image, a segmentation feature of a segmentation map corresponding to the entity image, an image feature of a crop map of the entity image, an image depth feature of the entity image, or a local feature (for example, facial feature, and further, face feature) of the entity image.

That is to say, when the initial multimodal features are constructed, the types of image features inserted may be in various forms. Thus, compared with the currently-used single Red Green Blue (RGB) feature, the solution of the present disclosure can support features in more expression forms, enrich the expression forms of the initial multimodal features, and improve the application universality of the model; and can also effectively enhance the semantic understanding ability of the model and have the better generalization ability when facing different types of inputs, laying the foundation for subsequently generating the high-quality inference results meeting user requirements.

Further, in a specific example, the feature expression of the image feature of the entity image may be determined in the following manner; and the above step of obtaining the initial multimodal features of the sample data may specifically include:
Manner 1: selecting one or more of the above feature expressions using the image-text encoder in the preset model and based on a sample feature of the sample data (for example, based on a task feature of a generation task indicated by sample data), to obtain the image feature of the entity image contained in the sample data and thus obtain the initial multimodal features.
Manner 2: randomly selecting one or more of the above feature expressions using the image-text encoder in the preset model, to obtain the image feature of the entity image contained in the sample data.

It should be noted that, when a plurality of the above feature expressions are selected in the above manner 1 or 2, one sample data can be expanded to obtain a plurality of initial multimodal features, thus enriching the sample size of model training effectively, and thereby providing strong support for improving the training efficiency of model training.

Furthermore, it should be noted that one of the above two manners may be selected and executed during the model training stage, and the above manners selected for different sample data may be the same or different, which is not limited in the solution of the present disclosure.

Further, it can be understood that, in order to further improve the generalization ability of the model, feature expressions selected for different sample data may be different, so that the trained target model can take into account any inference requirement, further enriching the usage scenarios and thus further improving the user experience.

Furthermore, it should be noted that the present disclosure does not limit how to select the above feature expression. For example, the feature expression may be adjusted based on actual scenario requirements or training requirements in a scenario.

Furthermore, it should be noted that the entity image described in the solution of the present disclosure may be specifically an image in any form, such as a segmentation map, a position coordinate map, a crop map or a line drawing, etc., which is not limited in the solution of the present disclosure.

In this way, the solution of the present disclosure can select the appropriate expression of the image feature according to the actual situation of the sample data, to construct diversified initial multimodal features. Compared with the currently-used single RGB feature, the solution of the present disclosure can support features in more expression forms, thereby having diversified initial multimodal features, so that the semantic understanding ability of the model can be enhanced in subsequent model training, thereby improving the controllability of the model in generating the image content. In addition, the usage of different feature expressions can also help process more complex generation tasks better, thereby laying the foundation for further improving the inference efficiency of the model and then further improving the user experience.

In a specific example of the solution of the present disclosure, each of the N diffusion networks is a dual information flow diffusion network; and further, in an example, the dual information flow diffusion network may specifically include: a first information flow (for example, which may be specifically a conditional information flow (Condition Flow) in an example, or may also be called a multimodal conditional information flow) for processing the initial multimodal features, and a second information flow (for example, which may be specifically a latent space flow (Latent Flow) in an example) for compressing the initial multimodal features based on the preset noise feature to represent the initial multimodal features in a latent space.

Here, since the dual information flow architecture is used and one branch of the dual information flow can also effectively process the multimodal features, the semantic understanding ability and controllability of the model are enhanced, and at the same time, it is ensured that the model can effectively support the input of multimodal information and can complete generation tasks (such as image generation tasks or text inference tasks, etc.) under multimodal conditions, thereby further improving the inference ability of the model and enriching the usage scenarios of the model.

Furthermore, it should be noted that the feature dimension of the features represented in the latent space is less than that of the initial multimodal features, thus taking into account the inference efficiency while improving the inference effect effectively.

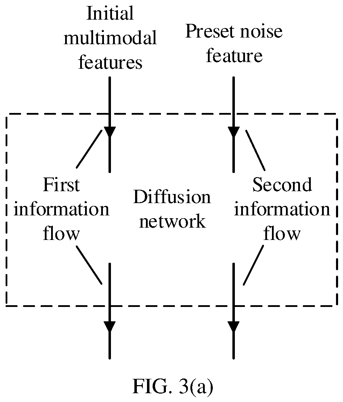

For example, in an example, as shown in FIG. 3(a), the first information flow is used to process the input initial multimodal features, and the second information flow is used to compress the initial multimodal features based on the preset noise feature. For example, in an example, the initial multimodal features with a feature dimension of 128×128×3 may be specifically mapped to the latent space for compression to obtain new features with a feature dimension of 32×32×3 of the initial multimodal features in the latent space. Furthermore, the preset noise feature may also be introduced in the above process to effectively enhance the inference ability of the model, enabling the model to learn data features more effectively and generate high-quality inference results.

In this way, the solution of the present disclosure can utilize the dual information flow diffusion network for model inference, and one branch in the dual information flow can also effectively process the multimodal features, thus ensuring that the model can effectively support the input of multimodal information and the model can understand the generation task from different perspectives, thereby retaining more details and semantic information in the subsequent task generation process, and efficiently generating the inference result meeting user expectations. In addition, the noise is introduced into the other branch of the dual information flow, thus improving the diversity and stability of the model in content generation.

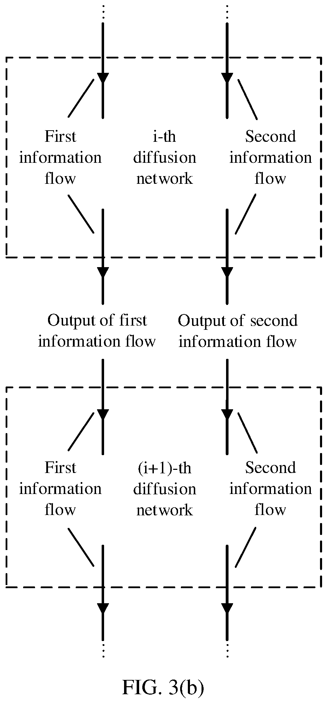

Further, in a specific example, when the value of N is greater than or equal to 2, the N diffusion networks are connected in series; and further, as shown in FIG. 3(b), an output of a first information flow in an i-th (i is a natural number greater than 0 and less than or equal to N-1) diffusion network among the N diffusion networks is an input of a first information flow in an (i+1)-th diffusion network among the N diffusion networks; and an output of a second information flow in the i-th diffusion network among the N diffusion networks is an input of a second information flow in the (i+1)-th diffusion network among the N diffusion networks. In this way, the N diffusion networks connected in series are used to improve the representation ability of the model and thus improve the overall performance of the model, and at the same time, can also effectively improve the generalization ability and robustness of the model, laying the foundation for further improving the user experience.

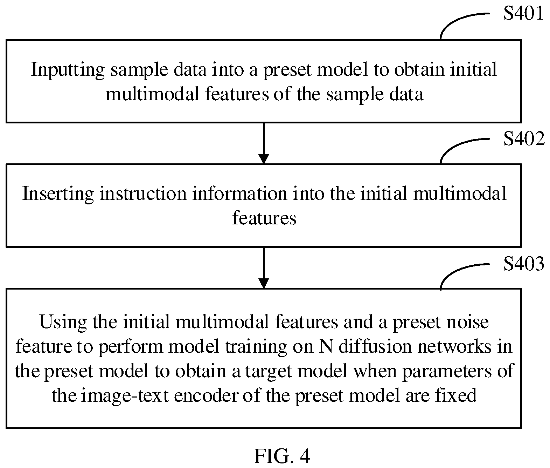

FIG. 4 is a second schematic flowchart of a model training method according to an embodiment of the present application. The method is optionally applied to electronic devices, such as personal computers, servers, server clusters and other electronic devices. It can be understood that the relevant content of the methods shown in FIG. 1 to FIG. 3(a) and FIG. 3(b) described above may also be applied to this example, and the relevant content will not be repeated in the example.

Further, the method includes at least a part of the following content. As shown in FIG. 4, the method includes the following steps.

Step S401: Sample data is input into a preset model to obtain initial multimodal features of the sample data.

Here, the sample data at least includes a sample text and at least one entity image. Further, the sample text includes at least one entity text, and the entity image is an image corresponding to the entity text.

Further, the initial multimodal features include an image feature of the entity image and a text feature of the entity text, and the image feature of the entity image is behind the text feature of the entity text corresponding to the entity image; in other words, the initial multimodal features are at least obtained by inserting the image feature of the entity image after the text feature of the entity text corresponding to the entity image in an example.

Here, the relevant content about the sample data can refer to the above description, and will not be repeated here.

Step S402: Instruction information in inserted into the initial multimodal features.

For instance, in an example, when it is determined based on the sample data that the image adjustment needs to be performed on at least some entity images, for example, the adjustment needs to be performed on a partial area of a specified entity image or the image adjustment needs to be performed on several specified entity images, etc., the instruction information may be inserted into the initial multimodal features, for example, the instruction information is inserted into a feature sequence representing the initial multimodal features.

For example, for the sample data of the task generation type, if the generation task indicated by the sample data requires image adjustment of at least some entity images (for example, adjustment of a partial area of a specified entity image, or image adjustment of several specified entity images among all entity images, etc.), the instruction information may be inserted into the initial multimodal features.

Here, the instruction information may specifically include an image feature of the entity image to be adjusted and an adjustment instruction. Further, the adjustment instructions may specifically include adding, deleting, attribute changing, exchanging, scaling, moving and other adjustment instructions, so that the instruction information is introduced into model training, which can effectively enhance the multimodal instruction capability of the model.

Step S403: The initial multimodal features (i.e., the initial multimodal features with the instruction information concatenated (or inserted) in step S402) and a preset noise feature are used to perform model training on N diffusion networks in the preset model to obtain a target model when parameters of the image-text encoder of the preset model are fixed.

Here, the target model can infer, based on input multimodal prompt information, a target inference result including an image and/or a text associated with the multimodal prompt information. Further, N is a positive integer greater than or equal to 1.

Here, the relevant description of the diffusion networks and the target model can refer to the above description and will not be repeated here.

In this way, the solution of the present disclosure can add the instruction information to the initial multimodal features obtained, and use the initial multimodal features with the instruction information added to perform model training on the preset model, so that the instruction capability of the model can be effectively improved by the instruction information, thereby improving the model's ability to understand the generation task indicated by the sample data, making the subsequently generated image more consistent with the generation task, achieving precise control of the generated image content, and thereby further improving the user experience.

Further, in a specific example, the instruction information may be inserted in the following manner; and specifically, the above step of inserting the instruction information into the initial multimodal features (such as the above step S402) specifically includes:
concatenating the instruction information at a head of a feature sequence representing the initial multimodal features.

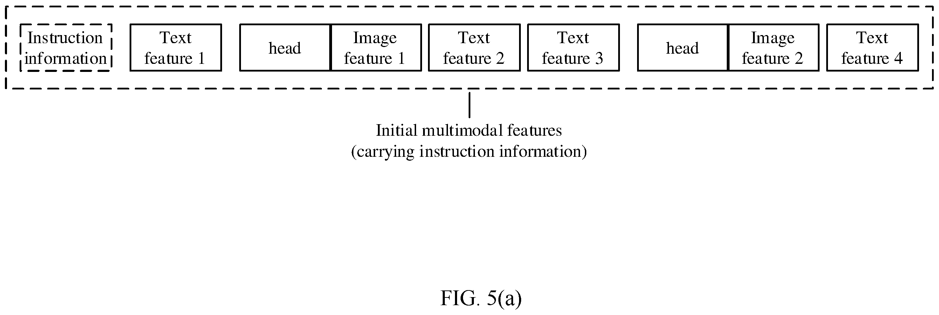

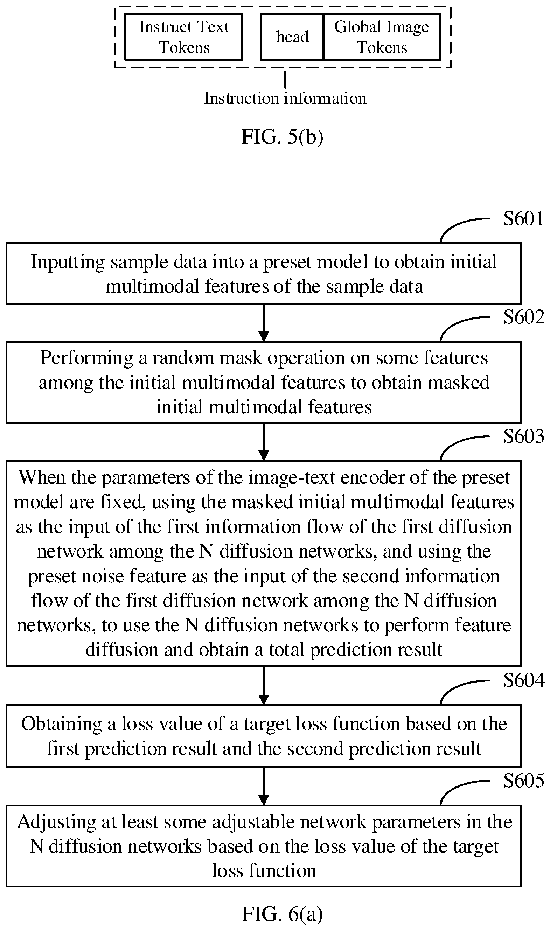

For example, taking the feature sequence of the initial multimodal features represented by FIG. 2 for example, when the generation task indicated by the sample data requires image adjustment of some entity images, as shown in FIG. 5(a), the instruction information may be concatenated at the head of the feature sequence represented by the initial multimodal features. Further, as shown in FIG. 5(b), the instruction information may be represented by two sequences, one of which is a text feature sequence (for example, denoted as Instruct Text Tokens) corresponding to the adjustment instruction, and the other is an image feature sequence (for example, denoted as Global Image Tokens) corresponding to the image feature of the entity image to be adjusted.

Further, it should be noted that, similar to the example shown in FIG. 2, in order to distinguish the text feature from the image feature, a header field (head) may be added before the image feature (for example, Global Image Tokens) to distinguish the text feature from the image feature in the instruction information, thereby providing strong support for further improving the controllability of image generation and improving the inference effect of the model.

In this way, the solution of the present disclosure provides a refined scheme for concatenating the initial multimodal features and the instruction information, thus effectively improving the instruction capability of the model; and at the same time, the scheme can also achieve precise control of the generated image content during model training, thereby laying the foundation for subsequent generation of images meeting user requirements.

FIG. 6(a) is a third schematic flowchart of a model training method according to an embodiment of the present application. The method is optionally applied to electronic devices, such as personal computers, servers, server clusters and other electronic devices. It can be understood that the relevant content of the methods shown in FIG. 1 to FIG. 5 described above may also be applied to this example, and the relevant content will not be repeated in this example.

Further, the method includes at least a part of the following content. As shown in FIG. 6(a), the method includes the following steps.

Step S601: Sample data is input into a preset model to obtain initial multimodal features of the sample data.

Here, the sample data at least includes a sample text and at least one entity image. Further, the sample text contains at least one entity text, and the entity image is an image corresponding to the entity text; and further, the initial multimodal features include an image feature of the entity image and a text feature of the entity text, and the image feature of the entity image is after the text feature of the entity text corresponding to the entity image.

Here, the relevant content about the sample data can refer to the above description, and will not be repeated here.

Step S602: A mask operation (for example, a random mask operation) is performed on some features among the initial multimodal features (or the initial multimodal features with instruction information concatenated) to obtain masked initial multimodal features.

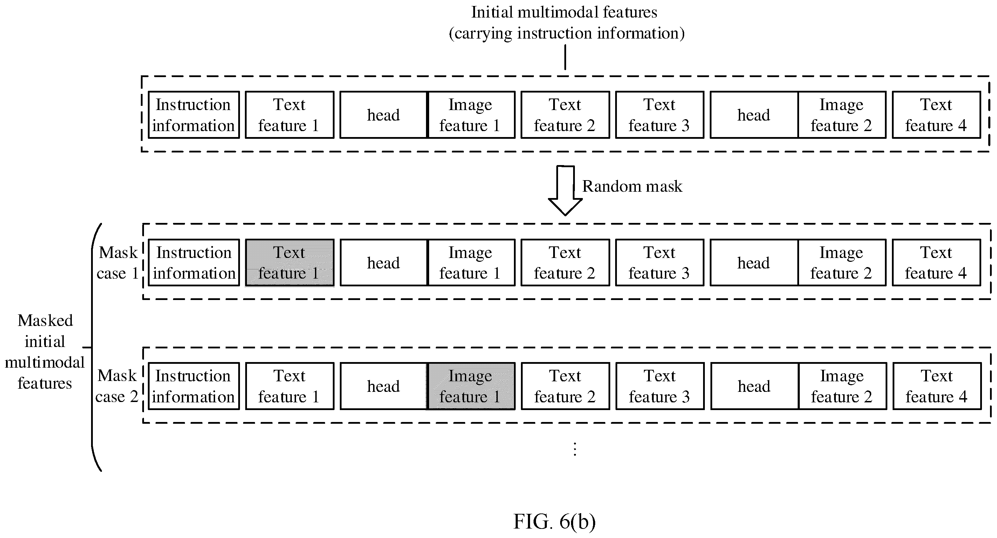

For example, taking the feature sequence of the initial multimodal features represented by FIG. 5(a) for example, the random mask operation may be performed on some features in the feature sequence representing the initial multimodal features at this time. For example, some tokens in the initial multimodal features are randomly masked with a certain probability. As shown in FIG. 6(b), the text feature 1 in the initial multimodal features is masked (corresponding to mask case 1), or the image feature 1 in the initial multimodal features is masked (corresponding to mask case 2), thereby obtaining the masked initial multimodal features. Here, since the solution of the present disclosure can mask at least part of the initial multimodal features, the finer-grained features can be processed subsequently in the first information flow, and then finer-grained modeling is performed, thus effectively improving the model's ability to control details and improving the model's ability to learn the fine-grained tasks, and thereby laying the foundation for improving the accuracy of the inference result.

Step S603: When the parameters of the image-text encoder of the preset model are fixed, the masked initial multimodal features are used as the input of the first information flow of the first diffusion network among the N diffusion networks, and the preset noise feature is used as the input of the second information flow of the first diffusion network among the N diffusion networks, to use the N diffusion networks to perform feature diffusion and obtain a total prediction result.

Here, the total prediction result may specifically include a first prediction result and a second prediction result.

Further, the first prediction result is a result output by the first information flow of the last diffusion network among the N diffusion networks, and the first prediction result may at least represent a predicted mask position corresponding to the predicted random mask operation. That is, the first prediction result is used to predict the position of the mask operation. For example, in an example, the first prediction result represents the feature targeted by the mask operation, and/or the specific position of the feature targeted by the mask operation in the initial multimodal features before the mask operation, so as to achieve feature reconstruction, and provide strong support for enabling the model to learn finer-grained generation tasks, realize finer-grained modeling and further have the ability to generate the multi-modal information (for example, given an entity text, generate a Bounding Box (Bbox) and a Face ID of the entity indicated by the entity text; or given an entity image, generate the text information of the entity image, etc.).

Further, the second prediction result is a result output by the second information flow of the last diffusion network among the N diffusion networks, and the second prediction result may specifically represent a prediction result of the generation task indicated by the predicted sample data in the latent space. That is, the second prediction result is used to represent the expression of the prediction result in the latent space, and the prediction result refers to a generation result required by the generation task indicated by the sample data. For example, in an example, the prediction result represents the prediction result output by the model in the latent space in the current step.

Step S604: A loss value of a target loss function is obtained based on the first prediction result and the second prediction result.

Here, the target loss function is used to calculate a difference between the predicted mask position and the actual mask position, and calculate a difference between the prediction result of the generation task indicated by the sample data in the latent space and the actual result in the latent space (for example, the actual result of the current step in the latent space).

Here, the actual result in the latent space may be understood as a theoretical result that needs to be achieved in the current step.

Step S605: At least some adjustable network parameters in the N diffusion networks are adjusted based on the loss value of the target loss function until the number of iterative training times (for example, the number of iterative training times of the current step) is reached and/or the loss value of the target loss function meets the model training requirement. At this time, the training of the current step is completed, thereby obtaining the target model.

It should be noted that, in the scenario of training the diffusion networks, the above steps S601 to S605 are specifically applied to any step in the total number of steps required for training the diffusion networks (or diffusion model). Accordingly, steps S601 to S605 are specifically as follows:
inputting the sample data required for the current step into the preset model, to obtain the initial multimodal features of the sample data used in the current step by using the image-text encoder in the preset model;
performing a mask operation on some features among the initial multimodal features (or the initial multimodal features with instruction information concatenated) to obtain masked initial multimodal features;
when the parameters of the image-text encoder are fixed, using the masked initial multimodal features as the input of the first information flow of the first diffusion network among the N diffusion networks, and using the preset noise feature required for the current step as the input of the second information flow of the first diffusion network among the N diffusion networks, to use the N diffusion networks to perform feature diffusion and obtain a total prediction result corresponding to the current training step;
obtaining the loss value of the target loss function, that is, the loss value of the current training step, based on the total prediction result; and
adjusting at least some adjustable network parameters in the N diffusion networks based on the loss value of the current training step, to complete the current training step and then obtain the target model after completing all training steps.

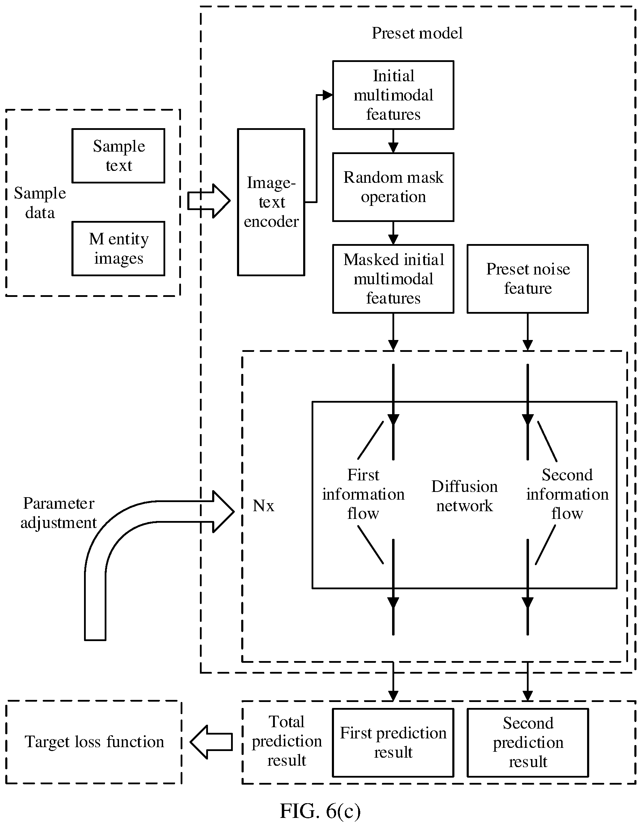

For example, as shown in FIG. 6(c), firstly the image-text encoder in the preset model is used to obtain the initial multimodal features, and the random mask operation is performed on some features among the initial multimodal features to obtain the masked initial multimodal features; secondly the masked initial multimodal features are used as the input of the first information flow of the first diffusion network among the N diffusion networks in the preset model, and the preset noise feature is used as the input of the second information flow of the first diffusion network, to use the N diffusion networks to perform feature diffusion, and then obtain the result output by the first information flow of the last diffusion network among the N diffusion networks (that is, the first prediction result) and the result output by the second information flow of the last diffusion network among the N diffusion networks (that is, the second prediction result); and the loss value of the target loss function is calculated according to the first prediction result and the second prediction result; and finally, at least some adjustable network parameters in the N diffusion networks in the preset model are adjusted based on the loss value of the target loss function, so as to complete the current training step and then obtain the target model after completing all training steps.

In this way, the solution of the present disclosure provides a refined scheme for training the N diffusion networks in the preset model to efficiently train the target model. Moreover, the training method effectively improves the model's ability to learn fine-grained tasks and improves the model's ability to control details, thereby improving the model's controllability for image content generation, making the obtained image content more consistent with the generation task indicated by the user, meeting the user's higher customization requirement, and thus further improving the user experience.

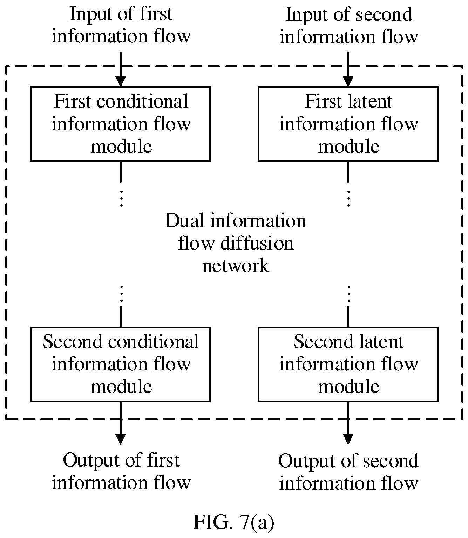

Further, in a specific example of the solution of the present disclosure, as shown in FIG. 7(a), the dual information flow diffusion network described above may include: a first conditional information flow module and a second conditional information flow module corresponding to the first information flow, and a first latent space flow module and a second latent space flow module corresponding to the second information flow.

Further, in the dual information flow diffusion network in the example, the input of the first information flow is the input of the first conditional information flow module, and the output of the second conditional information flow module is the output of the first information flow; and correspondingly, the input of the second information flow is the input of the first latent space flow module, and the output of the second latent space flow module is the output of the second information flow.

For example, for the first dual information flow diffusion network among the N dual information flow diffusion networks, the input of the first information flow is the initial multimodal features, and the input of the second information flow is the preset noise feature. At this time, the initial multimodal features are the input of the first conditional information flow module in the first dual information flow diffusion network, and the preset noise feature is the input of the first latent space flow module in the first dual information flow diffusion network; and correspondingly, the output of the second conditional information flow module in the first dual information flow diffusion network is the output of the first information flow in the first dual information flow diffusion network, and the output of the second latent space flow module in the first dual information flow diffusion network is the output of the second information flow in the first dual information flow diffusion network.

Here, the first conditional information flow module in the above example may mainly include a normalization (Layernorm) layer, a modular operation (Mod) layer and a linear (Linear) layer from top to bottom (for example, information is processed from top to bottom); and correspondingly, the first latent space flow module may also mainly include a normalization (Layernorm) layer, a modular operation (Mod) layer and a linear (Linear) layer from top to bottom (for example, information is processed from top to bottom).

Further, the second conditional information flow module in the above example may mainly include a linear layer, a normalization layer, a modular operation layer, a Multi-Layer Perceptron (MLP), etc. from top to bottom (for example, information is processed from top to bottom); and correspondingly, the second latent space flow module may also mainly include a linear layer, a normalization layer, a modular operation layer, a Multi-Layer Perceptron (MLP), etc. from top to bottom (for example, information is processed from top to bottom).

It should be noted that the above is only an exemplary description. In actual applications, the processing layers used in each information flow module and each space flow module can be set according to actual requirements, and are not limited in the solution of the present disclosure.

In this way, the solution of the present disclosure provides a specific architecture of the dual information flow diffusion network, where one branch of the architecture can efficiently process the multimodal features, so that the model can understand the generation task from different perspectives, thereby retaining more details and semantic information in the subsequent task generation process, and moreover accurate control of the image content can also be achieved to reduce information loss and further ensure that the generated image can meet the user's expectations, thus improving the user experience; and the other branch of the architecture introduces noise to improve the diversity and stability of the model in terms of content generation, thus effectively improving the flexibility and scalability of the entire model, and further providing strong support for further improving the user experience.

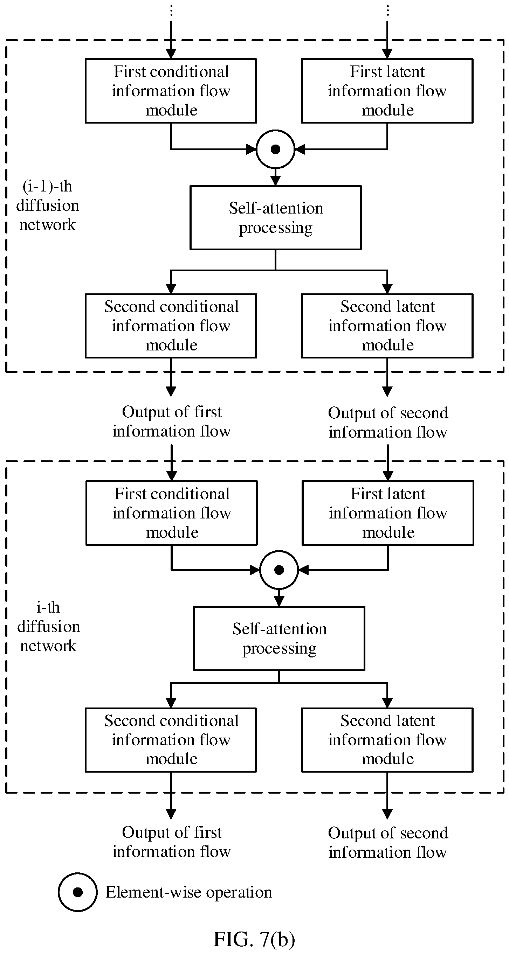

Further, in a specific example, the above step of using the N diffusion networks to perform feature diffusion, as shown in FIG. 7(b), may specifically include:
using the i-th (i is an integer greater than 0 and less than or equal to N at this time) diffusion network among the N diffusion networks (or N dual information flow diffusion networks) to perform feature diffusion by the following steps. In other words, the processing logic of the i-th diffusion network is as follows.

Step S701: The output of the first information flow in the (i-1)-th diffusion network (that is, the output of the first information flow in the previous diffusion network of the current diffusion network, such as specifically the output of the second conditional information flow module in the (i-1)-th diffusion network) is input into the first conditional information flow module in the i-th diffusion network (which can be understood as the current diffusion network) for processing; and the output of the second information flow in the (i-1)-th diffusion network (that is, the output of the second information flow in the previous diffusion network of the current diffusion network, such as the output of the second latent information flow module in the (i-1)-th diffusion network) is input into the first latent space flow module in the i-th diffusion network for processing.

Step S702: An element-wise operation is performed on a feature processed by the first conditional information flow module in the i-th diffusion network and a feature processed by the first latent space flow module in the i-th diffusion network to concatenate the feature processed by the first conditional information flow module and the feature processed by the first latent space flow module.

Step S703: Self-attention processing is performed on concatenated features to obtain fused features.

Step S704: A feature corresponding to the first information flow among the fused features is input into the second conditional information flow module in the i-th diffusion network to obtain the output of the second conditional information flow module; and a feature corresponding to the second information flow among the fused features is input into the second latent space flow module in the i-th diffusion network to obtain the output of the second latent space flow module.

It should be pointed out that, in the example, when the value of i is 1, the input of the first conditional information flow module in the (i-1)-th diffusion network is the masked initial multimodal features (or the masked initial multimodal features with instruction information concatenated), and the input of the first latent space flow module in the (i-1)-th diffusion network is the preset noise feature.

In this way, the solution of the present disclosure provides a specific scheme for feature diffusion using the N dual information flow diffusion networks, so that the key features and details in texts and/or images can be effectively captured and disseminated, the model can understand the generation task from different perspectives, thereby retaining more details and semantic information in the subsequent task generation process, and moreover the accurate control of the image content can also be achieved, thereby ensuring that the generated image can meet the user's expectations. At the same time, the diversity and stability of the model in terms of content generation can also be improved, effectively improving the flexibility and scalability of the entire model, and further providing strong support for further meeting the users' higher customization requirements and improving the user experience.

Part 2: Detailed description of model usage scenarios:

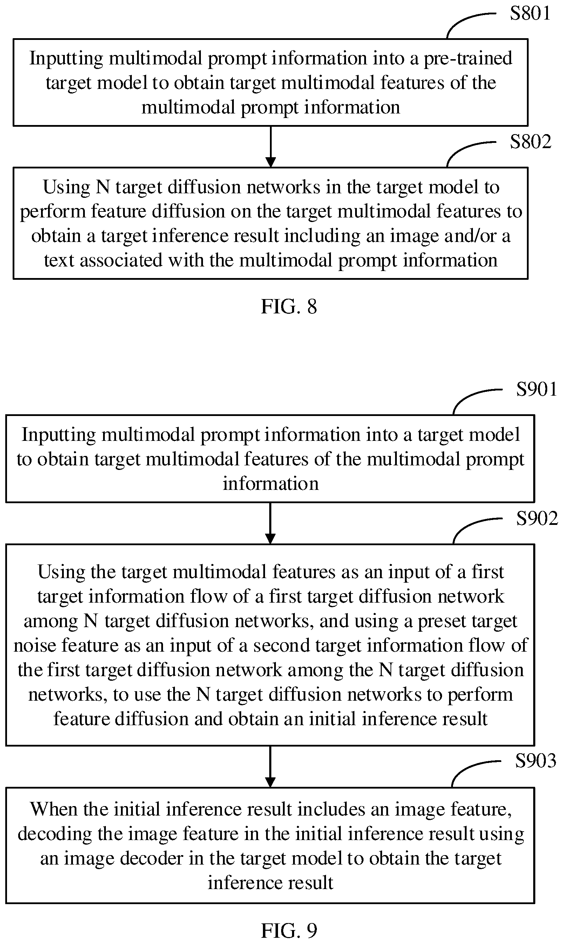

FIG. 8 is a first schematic flowchart of a multimodal data processing method according to an embodiment of the present application. The method is optionally applied to electronic devices, such as personal computers, servers, server clusters and other electronic devices.

Further, the method includes at least a part of the following content. As shown in FIG. 8, the method includes the following steps.

Step S801: Multimodal prompt information is input into a pre-trained target model to obtain target multimodal features of the multimodal prompt information.

For example, in an example, after the multimodal prompt information is input into the pre-trained (or trained) target model, an image-text encoder in the target model may be used to obtain the target multimodal features of the multimodal prompt information.

Here, in an example, the multimodal prompt information at least includes a target text and at least one target entity image (may be denoted as M3 target entity images for the convenience of subsequent description). Further, the target text includes at least one target entity text (may be denoted as M3 target entity texts for the convenience of subsequent description). At this time, the target entity image is an image corresponding to the target entity text.

Here, M3 and M4 are positive integers greater than or equal to 1. Further, in an example, values of M3 and M4 may be different, for example, M3 is less than M4, which case may correspond to a scenario where not all target texts correspond to one target entity image. Alternatively, in another example, the values of M3 and M4 are the same, which case may correspond to a scenario where one target entity text corresponds to one target entity image.

Here, it should be noted that the relationship between the target entity texts and the target entity images may be one-to-one or one-to-many, which is not limited in the solution of the present disclosure. Accordingly, the values of M3 and M4 are not limited in the solution of the present disclosure either.

Further, in an example, the target multimodal features include an image feature of the target entity image and a text feature of the target entity text, and the image feature of the target entity image is behind the text feature of the target entity text corresponding to the target entity image; in other words, the target multimodal features are at least obtained by inserting the image feature of the target entity image after the text feature of the target entity text corresponding to the target entity image in this example.

Further, the target model in this example is obtained by training based on any one of the above model training methods.

Step S802: N target diffusion networks in the target model are used to perform feature diffusion on the target multimodal features to obtain a target inference result including an image and/or a text associated with the multimodal prompt information.

Here, N is a positive integer greater than or equal to 1.

In this way, the solution of the present disclosure can use the target model for inference based on the input multimodal prompt information to obtain the target inference result including an image and/or a text associated with the multimodal prompt information. Compared with the existing solutions, the target model in the solution of the present disclosure has the multi-entity processing capability and also the multi-entity generation capability, enriching the user experience and also improving the user experience.

Moreover, since the solution of the present disclosure makes full use of the multi-modal prompt information of mixed image and text input, the solution of the present disclosure provides more context and detailed guidance in scenarios where image generation is required, thereby effectively improving the controllability of image content generation and further meeting users' higher inference requirements.

It should be noted that, for the model training phase described above, the above model training method can be mainly applied to the training of the "current step" of the diffusion network, in other words, the above model training method can be mainly applied to the training of any step of the diffusion network. For a model usage phase of the example, it is necessary to use the target diffusion networks to complete all steps before the target inference result described above can be obtained.

Furthermore, it should be noted that, when the multimodal prompt information is specifically a sample text including a plurality of target entity texts and a plurality of target entity images and each target entity text has a corresponding target entity image, the target multimodal features may, based on the normal browsing order of texts in the target text, be expressed as: [text feature of subtext 1 (which may be understood as target non-entity text) in target text, text feature of target entity text 1, image feature of target entity image corresponding to target entity text 1; text feature of subtext 2 (which may be understood as target non-entity text) in target text, text feature of target entity text 2, image feature of target entity image corresponding to target entity text 2; ...]. It can be understood that the above feature representation is only an exemplary description. In practical applications, the specific positions of the text features of the target non-entity texts and the text features of the target entity texts in the target multimodal features may be determined based on the positions of the target non-entity texts and the target entity texts in the target text.

Here, it should be noted that, in the above example, referring to the example shown in FIG. 2, the image-text alignment strategy is used to align the different modal information in the multimodal prompt information, thus realizing the feature representation of mixed image and text, and providing strong support for subsequent improvement of the controllability of image generation.

Further, it should be noted that, in order to more clearly distinguish the text feature from the image feature in the target multimodal features in the above example, the solution of the present disclosure may also set a header field (head) before the inserted image feature (such as the head), so as to distinguish the text feature from the image feature in the target multimodal features, thereby providing strong support for further improving the controllability of image generation and improving the inference effect of the model. The details can refer to the example shown in FIG. 2, and will not be described again here.

Further, in a specific example, the target multimodal features may be obtained in the following manner; and specifically, the above step of obtaining the target multimodal features of the multimodal prompt information (the above step S801) specifically includes:
selecting one or more of the following feature expressions using the image-text encoder in the target model and based on a data feature of the multimodal prompt information (for example, based on a task feature of the target generation task indicated by the multimodal prompt information), to obtain the image feature of the target entity image contained in the multimodal prompt information and obtain the target multimodal features:
a position feature of the target entity image, a segmentation feature of a segmentation map corresponding to the target entity image, an image feature of a crop map of the target entity image, an image depth feature of the target entity image, and a local feature (for example, facial feature, and further, face feature) of the target entity image.

That is to say, the solution of the present disclosure can determine the expression of image feature suitable for the task requirement according to the task requirement of the input multimodal prompt information. In other words, the solution of the present disclosure can flexibly support various forms of image features, thus enriching the expression forms of the target multimodal features and having a better generalization capability for different types of task requirements, laying the foundation for subsequently generating the high-quality inference results meeting user requirements, and further also laying the foundation for further improving the user experience.

It should be noted that the target entity image described in the solution of the present disclosure may be specifically an image in any form, such as a segmentation map, a position coordinate map, a crop map or a line drawing, etc., which is not limited in the solution of the present disclosure.

Thus, the solution of the present disclosure can select appropriate expressions of image features according to the actual situation of the input multimodal prompt information to construct diversified target multimodal features. Compared with the currently-used single RGB feature, the solution of the present disclosure can support more expression forms of features so as to obtain diversified target multimodal features, thus helping process more complex generation tasks better, and laying the foundation for further meeting users' higher inference requirements and further improving the user experience.

Further, in a specific example, before using N target diffusion networks in the target model to perform feature diffusion on the target multimodal features, the target multimodal features may also be adjusted based on the target generation task indicated by the multimodal prompt information, specifically including:
inserting target instruction information into the target multimodal features, where the target instruction information includes an image feature of a target entity image to be adjusted and a target adjustment instruction.

For instance, in an example, when it is determined based on the target multimodal features that the image adjustment needs to be performed on at least some target entity images, for example, the adjustment needs to be performed on a partial area of a specified target entity image or the image adjustment needs to be performed on several specified target entity images, etc., the target instruction information may be inserted into a feature sequence representing the target multimodal features, and then the N target diffusion networks in the target model are used to perform feature diffusion on the target multimodal features with the target instruction information inserted.

For instance, in an example, if the multimodal prompt information is prompt information of task generation-type information, the target instruction information may be inserted into the target multimodal features when the target generation task indicated by the multimodal prompt information requires image adjustment of at least some target entity images (for example, adjustment of a partial area of a specified target entity image, or image adjustment of several specified target entity images, etc.).

Here, the target instruction information includes an image feature of the target entity image to be adjusted and a target adjustment instruction. Further, the target adjustment instructions may be specifically adding, deleting, attribute changing, exchanging, scaling, moving and other adjustment instructions, so that the target instruction information is effectively utilized to instruct the inference process of the model, thereby improving the model's ability to understand the target generation task indicated by the multimodal prompt information, making the subsequently generated image more consistent with the target generation task, achieving precise control of the generated image content, and thereby further improving the user experience.

Further, in a specific example, the target instruction information may be inserted in the following manner; and specifically, the above step of inserting the target instruction information into the target multimodal features specifically includes:
concatenating the target instruction information at a head of a target feature sequence representing the target multimodal features.

For example, similar to the example of FIG. 5(a), when the target generation task indicated by the multimodal prompt information requires image adjustment of some target entity images, the target instruction information may be concatenated at the head of the target feature sequence represented by the target multimodal features. Further, similar to the example shown in FIG. 5(b), the target instruction information may be represented by two sequences, one of which is a text feature sequence (for example, denoted as Instruct Text Tokens) corresponding to the target adjustment instruction, and the other is an image feature sequence (for example, denoted as Global Image Tokens) corresponding to the image feature of the target entity image to be adjusted.

Further, it should be noted that, similar to the example shown in FIG. 2, in order to distinguish the text feature from the image feature, a header field (head) may be added before the image feature (for example, Global Image Tokens) to distinguish the text feature from the image feature in the target instruction information, thereby providing strong support for further improving the controllability of image generation and improving the inference effect of the model.

In this way, the solution of the present disclosure provides a refined scheme for concatenating the target multimodal features and the target instruction information, thus effectively improving the instruction capability of the model; and at the same time, the solution can also achieve precise control of the generated image content during model inference, thereby laying the foundation for subsequent generation of images meeting user requirements.

In a specific example of the solution of the present disclosure, each of the N target diffusion networks is a dual information flow target diffusion network; and further, in an example, the dual information flow target diffusion network may specifically include: a first target information flow (for example, which may be specifically a conditional information flow (Condition Flow), or may also be called a first target multimodal conditional information flow) for processing the target multimodal features, and a second target information flow (for example, which may be specifically a latent space flow (Latent Flow) in one example) for compressing the target multimodal features based on a preset noise feature to represent the target multimodal features in the latent space.

Here, since the dual information flow architecture is used and one branch of the dual information flow can effectively process the multimodal features, the semantic understanding ability and controllability of the model are enhanced, and at the same time, it is effectively ensured that the model can efficiently complete target generation tasks (such as image generation tasks or text inference tasks, etc.) under multimodal conditions, thereby further improving the inference ability of the model and enriching the usage scenarios of the model.

Furthermore, it should be noted that the feature dimension of the features represented in the latent space is less than that of the target multimodal features, thus taking into account the inference efficiency while improving the inference effect effectively.

For example, in an example, similar to the example shown in FIG. 3(a), in the dual information flow target diffusion network, the first target information flow is used to process the input target multimodal features (or target multimodal features with target instruction information concatenated), and the second target information flow is used to compress the target multimodal features based on the preset target noise feature. For example, in an example, the target multimodal features with a feature dimension of 128×128×3 may be specifically mapped to the latent space for compression to obtain new features with a feature dimension of 32×32×3 of the target multimodal features in the latent space. Furthermore, the preset target noise feature may also be introduced in the above process to effectively enhance the inference ability of the model, enabling the model to learn data features more effectively and generate high-quality inference results.

In this way, the solution of the present disclosure can utilize the dual information flow target diffusion network for model inference, and one branch in the dual information flow can also effectively process the multimodal features, thus ensuring that the model can effectively support the input of multimodal information and the model can understand the generation task from different perspectives, thereby retaining more details and semantic information in the subsequent task generation process, and efficiently generating the inference result meeting user expectations. In addition, the noise is introduced into the other branch of the dual information flow, thus improving the diversity and stability of the model in content generation.

Further, in a specific example, when the value of N is greater than or equal to 2, the N target diffusion networks are connected in series; and further, similar to the example shown in FIG. 3(b), an output of a first target information flow in an i-th (i is a natural number greater than or equal to 0 and less than or equal to N-1) target diffusion network among the N target diffusion networks is an input of a first target information flow in an (i+1)-th target diffusion network among the N target diffusion networks; and an output of a second target information flow in the i-th target diffusion network among the N target diffusion networks is an input of a second target information flow in the (i+1)-th target diffusion network among the N target diffusion networks. In this way, the N target diffusion networks connected in series are used to improve the representation ability of the model and further improve the overall performance of the model, and at the same time, can also effectively improve the generalization ability and robustness of the model, laying the foundation for further improving the user experience.

FIG. 9 is a second schematic flowchart of a multimodal data processing method according to an embodiment of the present application. The method is optionally applied to electronic devices, such as personal computers, servers, server clusters and other electronic devices. It can be understood that the relevant content of the method shown in FIG. 8 described above may also be applied to the example, and the relevant content will not be repeated in the example.

Further, the method includes at least a part of the following content. As shown in FIG. 9, the method includes the following steps.

Step S901: Multimodal prompt information is input into a target model to obtain target multimodal features of the multimodal prompt information.

Here, the target model is obtained by training based on the above model training method.

Further, the multimodal prompt information at least includes a target text and at least one target entity image, the target text includes at least one target entity text, and the target entity image is an image corresponding to the target entity text; the target multimodal features include an image feature of the target entity image and a text feature of the target entity text, and the image feature of the target entity image is behind the text feature of the target entity text corresponding to the target entity image.

Here, the relevant content about the multimodal prompt information can refer to the above examples, and will not be repeated here.

Step S902: The target multimodal features (or the target multimodal features with target instruction information concatenated) are used as an input of a first target information flow of a first target diffusion network among N target diffusion networks, and a preset target noise feature is used as an input of a second target information flow of the first target diffusion network among the N target diffusion networks, to use the N target diffusion networks to perform feature diffusion and obtain an initial inference result.

Here, the initial inference result is obtained based on a result output by the second target information flow of the last target diffusion network among the N target diffusion networks, and represents a prediction result of the predicted target generation task in the latent space, that is, the initial inference result represents the expression of the prediction result in the latent space, and the prediction result specifically refers to a generation result required for the target generation task indicated by the multimodal prompt information.

Step S903: When the initial inference result includes an image feature, the image feature in the initial inference result is decoded using an image decoder in the target model to obtain the target inference result.

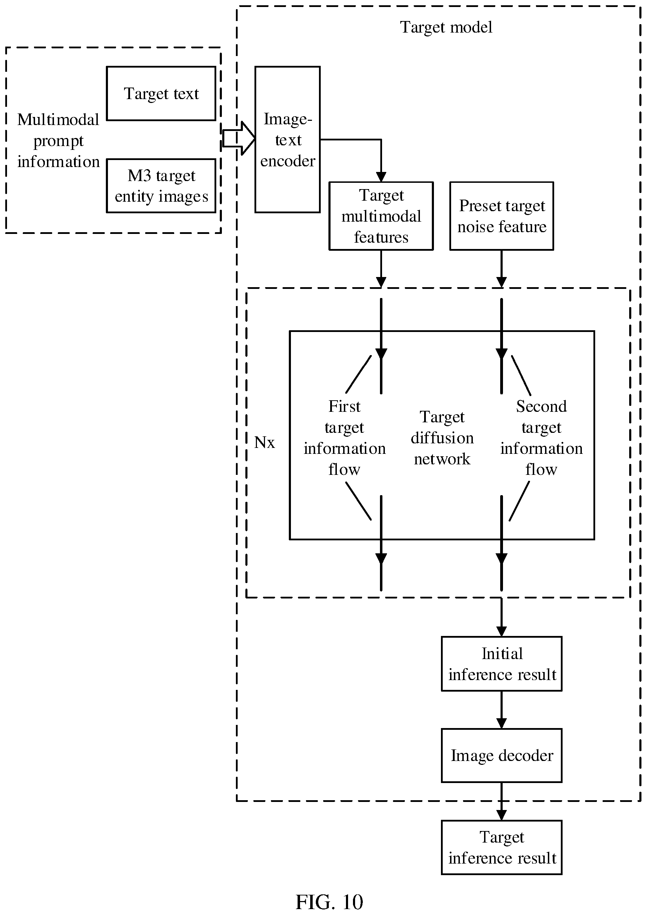

For example, as shown in FIG. 10, firstly the multimodal prompt information input by the target object is input into the target model, to use the image-text encoder in the target model to obtain the target multimodal features; secondly, the target multimodal features are used as the input of the first target information flow of the first target diffusion network among the N target diffusion networks, and the preset target noise feature is used as the input of the second target information flow of the first target diffusion network among the N target diffusion networks, to use the N target diffusion networks to perform feature diffusion, for example, the result output by the second target information flow of the last target diffusion network among the N target diffusion networks (that is, the output result of the second target information flow of the last target diffusion network in the last step), that is, the initial inference result, is obtained after the feature diffusion is performed a preset number of times; and finally, a final target inference result is obtained based on the initial inference result, or when the initial inference result includes an image feature, the image feature in the initial inference result is decoded using the image decoder in the target model to obtain the target inference result.

In this way, the solution of the present disclosure provides a refined scheme for using the N target diffusion networks in the target model for inference, and the scheme achieves precise control over image content generation, so that the resulting image content is more consistent with the generation task indicated by the user, thus meeting the user's higher customization requirement, thereby further improving the user experience.

Further, in a specific example of the solution of the present disclosure, the dual information flow target diffusion network described above may include: a first target conditional information flow module and a second target conditional information flow module corresponding to the first target information flow, and a first target latent space flow module and a second target latent space flow module corresponding to the second target information flow.

Further, similar to the example shown in FIG. 7(a), in the dual information flow target diffusion network in the example, the input of the first target information flow is the input of the first target conditional information flow module, and the output of the second target conditional information flow module is the output of the first target information flow; and correspondingly, the input of the second target information flow is the input of the first target latent space flow module, and the output of the second target latent space flow module is the output of the second target information flow.

For example, for the first dual information flow target diffusion network among the N dual information flow target diffusion networks, the input of the first target information flow is the target multimodal features, and the input of the second target information flow is the preset target noise feature. At this time, the target multimodal features are the input of the first target conditional information flow module in the first dual information flow target diffusion network, and the preset target noise feature is the input of the first target latent space flow module in the first dual information flow target diffusion network; and correspondingly, the output of the second target conditional information flow module in the first dual information flow target diffusion network is the output of the first target information flow in the first dual information flow target diffusion network, and the output of the second target latent layer space flow module in the first dual information flow target diffusion network is the output of the second target information flow in the first dual information flow target diffusion network.

In this way, the solution of the present disclosure provides a specific architecture of the dual information flow target diffusion network, where one branch of the architecture can efficiently process the multimodal features, so that the model can understand the generation task from different perspectives to thereby retain more details and semantic information in the subsequent task generation process, and moreover the accurate control of the image content can also be achieved to reduce information loss and further ensure that the generated image can meet the user's expectations, thus improving the user experience; and the other branch of the architecture introduces noise to improve the diversity and stability of the model in terms of content generation, thus effectively improving the flexibility and scalability of the entire model, and further providing strong support for further improving the user experience.

Further, in a specific example, the above step of using the N target diffusion networks to perform feature diffusion, similar to the example shown in FIG. 7(b), may specifically include:

using the i-th (i is an integer greater than 0 and less than or equal to N at this time) target diffusion network among the N target diffusion networks (or N dual information flow target diffusion networks) to perform feature diffusion by the following steps. In other words, the processing logic of the i-th target diffusion network is as follows:

Step S 1101: The output of the first target information flow in the (i-1)-th target diffusion network (that is, the output of the first target information flow in the previous target diffusion network of the current target diffusion network, such as specifically the output of the second target conditional information flow module in the (i-1)-th target diffusion network) is input into the first target conditional information flow module in the i-th target diffusion network (which can be understood as the current target diffusion network) for processing; and the output of the second target information flow in the (i-1)-th target diffusion network (that is, the output of the second target information flow in the previous target diffusion network of the current target diffusion network, such as the output of the second target latent information flow module in the (i-1)-th target diffusion network) is input into the first target latent space flow module in the i-th target diffusion network for processing.

Step S1102: An element-wise operation is performed on a feature processed by the first target conditional information flow module in the i-th target diffusion network and a feature processed by the first target latent space flow module in the i-th target diffusion network to concatenate the feature processed by the first target conditional information flow module and the feature processed by the first target latent space flow module.

Step S1103: Self-attention processing is performed on concatenated features to obtain target fused features.

Step S 1104: A feature corresponding to the first target information flow among the target fused features is input into the second target conditional information flow module in the i-th target diffusion network to obtain the output of the second target conditional information flow module; and a feature corresponding to the second target information flow among the target fused features is input into the second target latent space flow module in the i-th target diffusion network to obtain the output of the second target latent space flow module.

It should be pointed out that, in the example, when the value of i is 1, the input of the first target conditional information flow module in the (i-1)-th target diffusion network is the target multimodal features (or the target multimodal features with target instruction information concatenated), and the input of the first target latent space flow module in the (i-1)-th target diffusion network is the preset target noise feature.

Furthermore, it should be noted that, for the last target diffusion network, the output of the second target latent space flow module in the last target diffusion network can be directly used as the initial inference result.

In this way, the solution of the present disclosure provides a specific scheme for feature diffusion using the N dual information flow target diffusion networks, so that the key features and details in texts and/or images can be effectively captured and disseminated, the model can understand the generation task from different perspectives, thereby retaining more details and semantic information in a subsequent task generation process, and moreover the accurate control of the image content can also be achieved, thereby ensuring that the generated image can meet the user's expectations. At the same time, the diversity and stability of the model in terms of content generation can also be improved, thereby providing strong support for further meeting the users' higher customization requirements and improving the user experience.

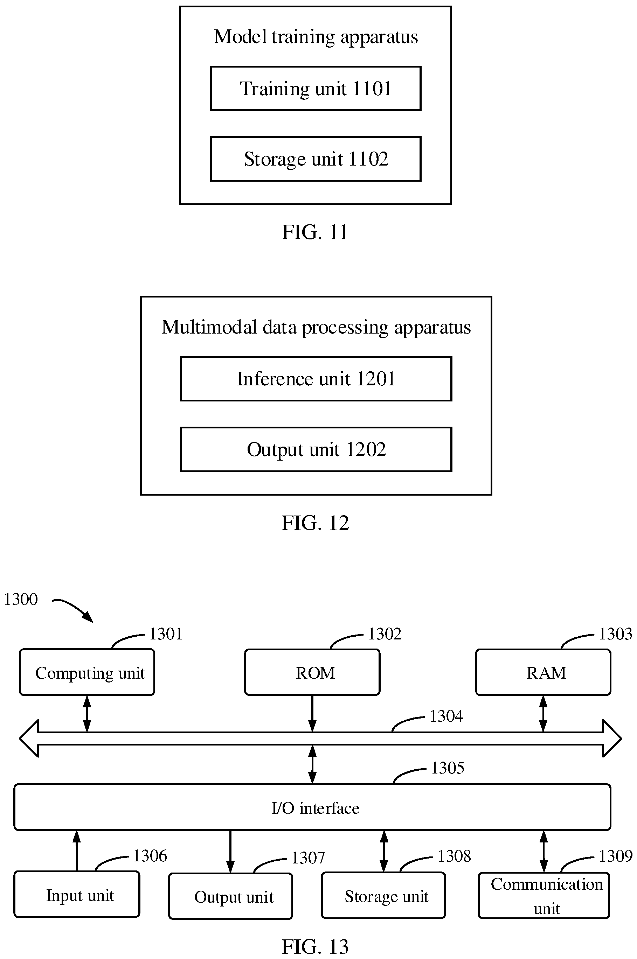

The solution of the present disclosure further provides a model training apparatus, as shown in FIG. 11, including:
a training unit 1101 configured to input sample data into a preset model to obtain initial multimodal features of the sample data via an image-text encoder in the preset model; where the sample data at least includes a sample text and at least one entity image, the sample text includes at least one entity text, and the entity image is an image corresponding to the entity text; the initial multimodal features include an image feature of the entity image and a text feature of the entity text, and the image feature of the entity image is behind the text feature of the entity text corresponding to the entity image; and use the initial multimodal features and a preset noise feature to perform model training on N diffusion networks in the preset model to obtain a target model when parameters of the image-text encoder of the preset model are fixed, where N is a positive integer; and
a storage unit 1102 configured to output the target model.

In a specific example of the solution of the present disclosure, the training unit is further configured to:
insert instruction information into the initial multimodal features, where the instruction information includes an image feature of an entity image to be adjusted and an adjustment instruction. For example, in an example, before using the initial multimodal features and the preset noise feature to perform model training on the N diffusion networks in the preset model, and when the image adjustment of the entity image is required, the instruction information is inserted into the initial multimodal features.

In a specific example of the solution of the present disclosure, the training unit is specifically configured to:
concatenate the instruction information at a head of a feature sequence representing the initial multimodal features.

In a specific example of the solution of the present disclosure, the N diffusion networks are all dual information flow diffusion networks, and each dual information flow diffusion network includes: a first information flow for processing the initial multimodal features, and a second information flow for compressing the initial multimodal features based on the preset noise feature to represent the initial multimodal features in a latent space.

In a specific example of the solution of the present disclosure, the N diffusion networks are connected in series when N is greater than or equal to 2; where an output of a first information flow in an i-th diffusion network among the N diffusion networks is an input of a first information flow in an (i+1)-th diffusion network among the N diffusion networks; and an output of a second information flow in the i-th diffusion network among the N diffusion networks is an input of a second information flow in the (i+1)-th diffusion network among the N diffusion networks.

In a specific example of the solution of the present disclosure, the training unit is further configured to:
perform a mask operation on some features among the initial multimodal features to obtain masked initial multimodal features.

In a specific example of the solution of the present disclosure, the training unit is specifically configured to:
use the masked initial multimodal features as an input of a first information flow of a first diffusion network among the N diffusion networks, and use the preset noise feature as an input of a second information flow of the first diffusion network among the N diffusion networks, to use the N diffusion networks to perform feature diffusion and obtain a total prediction result; where the total prediction result includes a first prediction result and a second prediction result, the first prediction result is a result output by a first information flow of a last diffusion network among the N diffusion networks, and at least represents a predicted mask position corresponding to a predicted mask operation; and the second prediction result is a result output by a second information flow of the last diffusion network among the N diffusion networks, and represents a prediction result of a generation task indicated by predicted sample data in the latent space;
obtain a loss value of a target loss function based on the first prediction result and the second prediction result; where the target loss function is used to calculate a difference between the predicted mask position and an actual mask position, and calculate a difference between the prediction result of the generation task indicated by the sample data in the latent space and an actual result in the latent space; and
adjust at least some adjustable network parameters in the N diffusion networks based on the loss value of the target loss function.

In a specific example of the solution of the present disclosure, the dual information flow diffusion network includes: a first conditional information flow module and a second conditional information flow module corresponding to the first information flow, and a first latent space flow module and a second latent space flow module corresponding to the second information flow;
an input of the first information flow is an input of the first conditional information flow module, and an output of the second conditional information flow module is an output of the first information flow; and
an input of the second information flow is an input of the first latent space flow module, and an output of the second latent space flow module is an output of the second information flow.

In a specific example of the solution of the present disclosure, the training unit is specifically configured to:
use the i-th diffusion network among the N diffusion networks to perform feature diffusion by following steps:
inputting an output of a first information flow in an (i-1)-th diffusion network into a first conditional information flow module in the i-th diffusion network for processing, and inputting an output of a second information flow in the (i-1)-th diffusion network into a first latent space flow module in the i-th diffusion network for processing;
performing an element-wise operation on a feature processed by the first conditional information flow module in the i-th diffusion network and a feature processed by the first latent space flow module in the i-th diffusion network to concatenate the feature processed by the first conditional information flow module and the feature processed by the first latent space flow module;
performing self-attention processing on concatenated features to obtain fused features; and
inputting a feature corresponding to the first information flow among the fused features into a second conditional information flow module in the i-th diffusion network to obtain an output of the second conditional information flow module; and inputting a feature corresponding to the second information flow among the fused features into a second latent space flow module in the i-th diffusion network to obtain an output of the second latent space flow module.

In a specific example of the solution of the present disclosure, feature expression of the image feature of the entity image includes at least one of: a position feature of the entity image, a segmentation feature of a segmentation map corresponding to the entity image, an image feature of a crop map of the entity image, an image depth feature of the entity image, or a local feature of the entity image.

In a specific example of the solution of the present disclosure, the training unit is specifically configured to:
select one or more of the above feature expressions using the image-text encoder in the preset model and based on a sample feature of the sample data, to obtain the image feature of the entity image contained in the sample data and obtain the initial multimodal features of the sample data;
or, select one or more of the above feature expressions randomly, to obtain the image feature of the entity image contained in the sample data and obtain the initial multimodal features of the sample data.

For the description of specific functions and examples of the units of the apparatus of the embodiment of the present disclosure, reference may be made to the relevant description of the corresponding steps in the above method embodiments, and details are not repeated here.

The solution of the present disclosure further provides a multimodal data processing apparatus, as shown in FIG. 12, including:
an inference unit 1201 configured to input multimodal prompt information into a pre-trained target model to obtain target multimodal features of the multimodal prompt information, where the multimodal prompt information at least includes a target text and at least one target entity image, the target text includes at least one target entity text, and the target entity image is an image corresponding to the target entity text; the target multimodal features include an image feature of the target entity image and a text feature of the target entity text, and the image feature of the target entity image is behind the text feature of the target entity text corresponding to the target entity image; and use N target diffusion networks in the target model to perform feature diffusion on the target multimodal features to obtain a target inference result including an image and/or a text associated with the multimodal prompt information; where N is a positive integer; and
an output unit 1202 configured to output the target inference result.

In a specific example of the solution of the present disclosure, the inference unit is further configured to: insert target instruction information into the target multimodal features, where the target instruction information includes an image feature of a target entity image to be adjusted and a target adjustment instruction. For example, in an example, when the image adjustment is required for at least some target entity images, the target instruction information is inserted into the target multimodal features.

In a specific example of the solution of the present disclosure, the inference unit is specifically configured to:
concatenate the target instruction information at a head of a target feature sequence representing the target multimodal features.

In a specific example of the solution of the present disclosure, the N target diffusion networks are all dual information flow target diffusion networks, and each dual information flow target diffusion network includes: a first target information flow for processing the target multimodal features, and a second target information flow for compressing the target multimodal features based on a preset target noise feature to represent the target multimodal features in a latent space.

In a specific example of the solution of the present disclosure, the N target diffusion networks are connected in series when N is greater than or equal to 2; where an output of a first target information flow in an i-th target diffusion network among the N target diffusion networks is an input of a first target information flow in an (i+1)-th target diffusion network among the N target diffusion networks; and an output of a second target information flow in the i-th target diffusion network among the N target diffusion networks is an input of a second target information flow in the (i+1)-th target diffusion network among the N target diffusion networks.

In a specific example of the solution of the present disclosure, the inference unit is specifically configured to:
use the target multimodal features as an input of a first target information flow of a first target diffusion network among the N target diffusion networks, and use the preset target noise feature as an input of a second target information flow of the first target diffusion network among the N target diffusion networks, to use the N target diffusion networks to perform feature diffusion and obtain an initial inference result, where the initial inference result is obtained based on a result output by a second target information flow of a last target diffusion network among the N target diffusion networks, and represents a prediction result of a predicted target generation task in the latent space; and
when the initial inference result includes an image feature, decode the image feature in the initial inference result using an image decoder in the target model to obtain the target inference result.

In a specific example of the solution of the present disclosure, the dual information flow target diffusion network includes: a first target conditional information flow module and a second target conditional information flow module corresponding to the first target information flow, and a first target latent space flow module and a second target latent space flow module corresponding to the second target information flow;
an input of the first target information flow is an input of the first target conditional information flow module, and an output of the second target conditional information flow module is an output of the first target information flow; and
an input of the second target information flow is an input of the first target latent space flow module, and an output of the second target latent space flow module is an output of the second target information flow.

In a specific example of the solution of the present disclosure, the inference unit is specifically configured to:
use the i-th target diffusion network among the N target diffusion networks to perform feature diffusion by following steps:
inputting an output of a first target information flow in an (i-1)-th target diffusion network into a first target conditional information flow module in the i-th target diffusion network for processing, and inputting an output of a second target information flow in the (i-1)-th target diffusion network into a first target latent space flow module in the i-th target diffusion network for processing;
performing an element-wise operation on a feature processed by the first target conditional information flow module in the i-th target diffusion network and a feature processed by the first target latent space flow module in the i-th target diffusion network to concatenate the feature processed by the first target conditional information flow module and the feature processed by the first target latent space flow module;
performing self-attention processing on concatenated features to obtain target fused features; and
inputting a feature corresponding to the first target information flow among the target fused features into a second target conditional information flow module in the i-th target diffusion network to obtain an output of the second target conditional information flow module; and inputting a feature corresponding to the second target information flow among the target fused features into a second target latent space flow module in the i-th target diffusion network to obtain an output of the second target latent space flow module.

In a specific example of the solution of the present disclosure, the inference unit is specifically configured to:
select one or more of following feature expressions using an image-text encoder in the target model and based on a data feature of the multimodal prompt information, to obtain the image feature of the target entity image contained in the multimodal prompt information and obtain the target multimodal features:
a position feature of the target entity image, a segmentation feature of a segmentation map corresponding to the target entity image, an image feature of a crop map of the target entity image, an image depth feature of the target entity image, and a local feature of the target entity image.

For the description of specific functions and examples of the units of the apparatus of the embodiment of the present disclosure, reference may be made to the relevant description of the corresponding steps in the above method embodiments, and details are not repeated here.

In the technical solution of the present disclosure, the acquisition, storage and application of the user's personal information involved are in compliance with relevant laws and regulations, and do not violate public order and good customs.

According to the embodiments of the present disclosure, the present disclosure also provides an electronic device, a readable storage medium and a computer program product.

FIG. 13 shows a schematic block diagram of an exemplary electronic device 1300 that may be used to implement the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital assistant, a cellular phone, a smart phone, a wearable device and other similar computing devices. The components shown herein, their connections and relationships, and their functions are merely examples, and are not intended to limit the implementation of the present disclosure described and/or required herein.

As shown in FIG. 13, the device 1300 includes a computing unit 1301 that may perform various appropriate actions and processes according to a computer program stored in a Read-Only Memory (ROM) 1302 or a computer program loaded from a storage unit 1308 into a Random Access Memory (RAM) 1303. Various programs and data required for an operation of the device 1300 may also be stored in the RAM 1303. The computing unit 1301, the ROM 1302 and the RAM 1303 are connected to each other via a bus 1304. An input/output (I/O) interface 1305 is also connected to the bus 1304.

A plurality of components in the device 1300 are connected to the I/O interface 1305, and include an input unit 1306 such as a keyboard, a mouse, or the like; an output unit 1307 such as various types of displays, speakers, or the like; a storage unit 1308 such as a magnetic disk, an optical disk, or the like; and a communication unit 1309 such as a network card, a modem, a wireless communication transceiver, or the like. The communication unit 1309 allows the device 1300 to exchange information/data with other devices via a computer network such as the Internet and/or various telecommunication networks.

The computing unit 1301 may be various general-purpose and/or special-purpose processing components with processing and computing capabilities. Some examples of the computing unit 1301 include, but are not limited to, a Central Processing Unit (CPU), a Graphics Processing Unit (GPU), various dedicated Artificial Intelligence (AI) computing chips, various computing units that run machine learning model algorithms, a Digital Signal Processor (DSP), and any appropriate processors, controllers, microcontrollers, or the like. The computing unit 1301 performs various methods and processing described above, such as the model training method or multimodal data processing method. For example, in some implementations, the model training method or multimodal data processing method may be implemented as a computer software program tangibly contained in a computer-readable medium, such as the storage unit 1308. In some implementations, a part or all of the computer program may be loaded and/or installed on the device 1300 via the ROM 1302 and/or the communication unit 1309. When the computer program is loaded into the RAM 1303 and executed by the computing unit 1301, one or more steps of the model training method or multimodal data processing method described above may be performed. Alternatively, in other implementations, the computing unit 1301 may be configured to perform the model training method or multimodal data processing method by any other suitable means (e.g., by means of firmware).

Various implementations of the system and technologies described above herein may be implemented in a digital electronic circuit system, an integrated circuit system, a Field Programmable Gate Array (FPGA), an Application Specific Integrated Circuit (ASIC), an Application Specific Standard Product (ASSP), a System on Chip (SOC), a Complex Programmable Logic Device (CPLD), a computer hardware, firmware, software, and/or a combination thereof. These various implementations may be implemented in one or more computer programs, and the one or more computer programs may be executed and/or interpreted on a programmable system including at least one programmable processor. The programmable processor may be a special-purpose or general-purpose programmable processor, may receive data and instructions from a storage system, at least one input device, and at least one output device, and transmit the data and the instructions to the storage system, the at least one input device, and the at least one output device.

The program code for implementing the method of the present disclosure may be written in any combination of one or more programming languages. The program code may be provided to a processor or controller of a general-purpose computer, a special-purpose computer or other programmable data processing devices, which enables the program code, when executed by the processor or controller, to cause the function/operation specified in the flowchart and/or block diagram to be implemented. The program code may be completely executed on a machine, partially executed on the machine, partially executed on the machine as a separate software package and partially executed on a remote machine, or completely executed on the remote machine or a server.

In the context of the present disclosure, a machine-readable medium may be a tangible medium, which may contain or store a procedure for use by or in connection with an instruction execution system, device or apparatus. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include electrical connections based on one or more lines, a portable computer disk, a hard disk, a Random Access Memory (RAM), a Read-Only Memory (ROM), an Erasable Programmable Read-Only Memory (EPROM or a flash memory), an optical fiber, a portable Compact Disc Read-Only Memory (CD-ROM), an optical storage device, a magnetic storage device, or any suitable combination thereof.

In order to provide interaction with a user, the system and technologies described herein may be implemented on a computer that has: a display apparatus (e.g., a cathode ray tube (CRT) or a Liquid Crystal Display (LCD) monitor) for displaying information to the user; and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback), and the input from the user may be received in any form (including an acoustic input, a voice input, or a tactile input).

The system and technologies described herein may be implemented in a computing system (which serves as, for example, a data server) including a back-end component, or in a computing system (which serves as, for example, an application server) including a middleware, or in a computing system including a front-end component (e.g., a user computer with a graphical user interface or web browser through which the user may interact with the implementation of the system and technologies described herein), or in a computing system including any combination of the back-end component, the middleware component, or the front-end component. The components of the system may be connected to each other via any form or kind of digital data communication (e.g., a communication network). Examples of the communication network include a Local Area Network (LAN), a Wide Area Network (WAN), and the Internet.

A computer system may include a client and a server. The client and the server are generally far away from each other and usually interact with each other via a communication network. A relationship between the client and the server is generated by computer programs running on corresponding computers and having a client-server relationship with each other. The server may be a cloud server, a distributed system server, or a blockchain server.

It should be understood that, the steps may be reordered, added or removed by using the various forms of the flows described above. For example, the steps recorded in the present disclosure can be performed in parallel, in sequence, or in different orders, as long as a desired result of the technical scheme disclosed in the present disclosure can be realized, which is not limited herein.

The foregoing specific implementations do not constitute a limitation on the protection scope of the present disclosure. Those having ordinary skill in the art should understand that, various modifications, combinations, sub-combinations and substitutions may be made according to a design requirement and other factors. Any modification, equivalent replacement, improvement or the like made within the principle of the present disclosure shall be included in the protection scope of the present disclosure.

## Claims

1. A target model training method, comprising:
inputting (S101, S401, S601) sample data into a preset model to obtain initial multimodal features of the sample data; wherein the sample data at least comprises a sample text and at least one entity image, the sample text comprises at least one entity text, and the entity image is an image corresponding to the entity text; the initial multimodal features comprise an image feature of the entity image and a text feature of the entity text, and the image feature of the entity image is behind the text feature of the entity text corresponding to the entity image; and
using (S102, S403) the initial multimodal features and a preset noise feature to perform model training on N diffusion networks in the preset model to obtain a target model when parameters of an image-text encoder of the preset model are fixed, wherein N is a positive integer.

2. The method of claim 1, further comprising:
inserting (S402) instruction information into the initial multimodal features, wherein the instruction information comprises an image feature of an entity image to be adjusted and an adjustment instruction;
preferably, inserting the instruction information into the initial multimodal features, comprises:
concatenating the instruction information at a head of a feature sequence representing the initial multimodal features.

3. The method of any one of claims 1 to 2, wherein the N diffusion networks are all dual information flow diffusion networks, and each dual information flow diffusion network comprises: a first information flow for processing the initial multimodal features, and a second information flow for compressing the initial multimodal features based on the preset noise feature to represent the initial multimodal features in a latent space;
wherein the N diffusion networks are connected in series when N is greater than or equal to 2; wherein an output of a first information flow in an i-th diffusion network among the N diffusion networks is an input of a first information flow in an (i+1)-th diffusion network among the N diffusion networks; and an output of a second information flow in the i-th diffusion network among the N diffusion networks is an input of a second information flow in the (i+1)-th diffusion network among the N diffusion networks.

4. The method of claim 3, further comprising:
performing (S602) a mask operation on some features among the initial multimodal features to obtain masked initial multimodal features;
preferably, using the initial multimodal features and the preset noise feature to perform model training on the N diffusion networks in the preset model, comprises:
using (S603) the masked initial multimodal features as an input of a first information flow of a first diffusion network among the N diffusion networks, and using the preset noise feature as an input of a second information flow of the first diffusion network among the N diffusion networks, to use the N diffusion networks to perform feature diffusion and obtain a total prediction result; wherein the total prediction result comprises a first prediction result and a second prediction result, the first prediction result is a result output by a first information flow of a last diffusion network among the N diffusion networks, and at least represents a predicted mask position corresponding to a predicted mask operation; and the second prediction result is a result output by a second information flow of the last diffusion network among the N diffusion networks, and represents a prediction result of a generation task indicated by predicted sample data in the latent space;
obtaining (S604) a loss value of a target loss function based on the first prediction result and the second prediction result; wherein the target loss function is used to calculate a difference between the predicted mask position and an actual mask position, and calculate a difference between the prediction result of the generation task indicated by the sample data in the latent space and an actual result in the latent space; and
adjusting (S605) at least some adjustable network parameters in the N diffusion networks based on the loss value of the target loss function.

5. The method of claim 4, wherein the dual information flow diffusion network comprises: a first conditional information flow module and a second conditional information flow module corresponding to the first information flow, and a first latent space flow module and a second latent space flow module corresponding to the second information flow;
an input of the first information flow is an input of the first conditional information flow module, and an output of the second conditional information flow module is an output of the first information flow; and
an input of the second information flow is an input of the first latent space flow module, and an output of the second latent space flow module is an output of the second information flow;
preferably, using the N diffusion networks to perform feature diffusion, comprises:
using the i-th diffusion network among the N diffusion networks to perform feature diffusion by following steps:
inputting an output of a first information flow in an (i-1)-th diffusion network into a first conditional information flow module in the i-th diffusion network for processing, and inputting an output of a second information flow in the (i-1)-th diffusion network into a first latent space flow module in the i-th diffusion network for processing;
performing an element-wise operation on a feature processed by the first conditional information flow module in the i-th diffusion network and a feature processed by the first latent space flow module in the i-th diffusion network to concatenate the feature processed by the first conditional information flow module and the feature processed by the first latent space flow module;
performing self-attention processing on concatenated features to obtain fused features; and
inputting a feature corresponding to the first information flow among the fused features into a second conditional information flow module in the i-th diffusion network to obtain an output of the second conditional information flow module; and inputting a feature corresponding to the second information flow among the fused features into a second latent space flow module in the i-th diffusion network to obtain an output of the second latent space flow module.

6. The method of any one of claims 1 to 5, wherein feature expression of the image feature of the entity image comprises at least one of: a position feature of the entity image, a segmentation feature of a segmentation map corresponding to the entity image, an image feature of a crop map of the entity image, an image depth feature of the entity image, or a local feature of the entity image;
preferably, obtaining the initial multimodal features of the sample data, comprises:
selecting one or more of the above feature expressions using the image-text encoder in the preset model and based on a sample feature of the sample data, to obtain the image feature of the entity image contained in the sample data and obtain the initial multimodal features of the sample data;
or, selecting one or more of the above feature expressions randomly, to obtain the image feature of the entity image contained in the sample data and obtain the initial multimodal features of the sample data.

7. A multimodal data processing method, comprising:
inputting (S801, S901) multimodal prompt information into a pre-trained target model to obtain target multimodal features of the multimodal prompt information, wherein the multimodal prompt information at least comprises a target text and at least one target entity image, the target text comprises at least one target entity text, and the target entity image is an image corresponding to the target entity text; the target multimodal features comprise an image feature of the target entity image and a text feature of the target entity text, and the image feature of the target entity image is behind the text feature of the target entity text corresponding to the target entity image; and
using (S802) N target diffusion networks in the target model to perform feature diffusion on the target multimodal features to obtain a target inference result comprising an image and/or a text associated with the multimodal prompt information; wherein N is a positive integer.

8. The method of claim 7, further comprising:
inserting target instruction information into the target multimodal features, wherein the target instruction information comprises an image feature of a target entity image to be adjusted and a target adjustment instruction;
preferably, inserting the target instruction information into the target multimodal features, comprises:
concatenating the target instruction information at a head of a target feature sequence representing the target multimodal features.

9. The method of any one of claims 7 to 8, wherein the N target diffusion networks are all dual information flow target diffusion networks, and each dual information flow target diffusion network comprises: a first target information flow for processing the target multimodal features, and a second target information flow for compressing the target multimodal features based on a preset target noise feature to represent the target multimodal features in a latent space;
preferably, the N target diffusion networks are connected in series when N is greater than or equal to 2; wherein an output of a first target information flow in an i-th target diffusion network among the N target diffusion networks is an input of a first target information flow in an (i+1)-th target diffusion network among the N target diffusion networks; and an output of a second target information flow in the i-th target diffusion network among the N target diffusion networks is an input of a second target information flow in the (i+1)-th target diffusion network among the N target diffusion networks;
preferably, using the N target diffusion networks in the target model to perform feature diffusion on the target multimodal features to obtain the target inference result comprising the image and/or the text associated with the multimodal prompt information, comprises:
using (S902) the target multimodal features as an input of a first target information flow of a first target diffusion network among the N target diffusion networks, and using the preset target noise feature as an input of a second target information flow of the first target diffusion network among the N target diffusion networks, to use the N target diffusion networks to perform feature diffusion and obtain an initial inference result, wherein the initial inference result is obtained based on a result output by a second target information flow of a last target diffusion network among the N target diffusion networks, and represents a prediction result of a predicted target generation task in the latent space; and
when the initial inference result comprises an image feature, decoding the image feature in the initial inference result using an image decoder in the target model to obtain the target inference result (S903).

10. The method of claim 9, wherein the dual information flow target diffusion network comprises: a first target conditional information flow module and a second target conditional information flow module corresponding to the first target information flow, and a first target latent space flow module and a second target latent space flow module corresponding to the second target information flow;
an input of the first target information flow is an input of the first target conditional information flow module, and an output of the second target conditional information flow module is an output of the first target information flow; and
an input of the second target information flow is an input of the first target latent space flow module, and an output of the second target latent space flow module is an output of the second target information flow;
preferably, using the N target diffusion networks to perform feature diffusion, comprises:
using the i-th target diffusion network among the N target diffusion networks to perform feature diffusion by following steps:
inputting an output of a first target information flow in an (i-1)-th target diffusion network into a first target conditional information flow module in the i-th target diffusion network for processing, and inputting an output of a second target information flow in the (i-1)-th target diffusion network into a first target latent space flow module in the i-th target diffusion network for processing;
performing an element-wise operation on a feature processed by the first target conditional information flow module in the i-th target diffusion network and a feature processed by the first target latent space flow module in the i-th target diffusion network to concatenate the feature processed by the first target conditional information flow module and the feature processed by the first target latent space flow module;
performing self-attention processing on concatenated features to obtain target fused features; and
inputting a feature corresponding to the first target information flow among the target fused features into a second target conditional information flow module in the i-th target diffusion network to obtain an output of the second target conditional information flow module; and inputting a feature corresponding to the second target information flow among the target fused features into a second target latent space flow module in the i-th target diffusion network to obtain an output of the second target latent space flow module.

11. The method of any one of claims 8 to 10, wherein obtaining the target multimodal features of the multimodal prompt information, comprises:
selecting one or more of following feature expressions using an image-text encoder in the target model and based on a data feature of the multimodal prompt information, to obtain the image feature of the target entity image contained in the multimodal prompt information and obtain the target multimodal features:
a position feature of the target entity image, a segmentation feature of a segmentation map corresponding to the target entity image, an image feature of a crop map of the target entity image, an image depth feature of the target entity image, and a local feature of the target entity image.

12. A target model training apparatus, comprising:
a training unit (1101) configured to input sample data into a preset model to obtain initial multimodal features of the sample data; wherein the sample data at least comprises a sample text and at least one entity image, the sample text comprises at least one entity text, and the entity image is an image corresponding to the entity text; the initial multimodal features comprise an image feature of the entity image and a text feature of the entity text, and the image feature of the entity image is behind the text feature of the entity text corresponding to the entity image; and use the initial multimodal features and a preset noise feature to perform model training on N diffusion networks in the preset model to obtain a target model when parameters of an image-text encoder of the preset model are fixed, wherein N is a positive integer; and
a storage unit (1102) configured to output the target model.

13. A multimodal data processing apparatus, comprising:
an inference unit (1201) configured to input multimodal prompt information into a pre-trained target model to obtain target multimodal features of the multimodal prompt information, wherein the multimodal prompt information at least comprises a target text and at least one target entity image, the target text comprises at least one target entity text, and the target entity image is an image corresponding to the target entity text; the target multimodal features comprise an image feature of the target entity image and a text feature of the target entity text, and the image feature of the target entity image is behind the text feature of the target entity text corresponding to the target entity image; and use N target diffusion networks in the target model to perform feature diffusion on the target multimodal features to obtain a target inference result comprising an image and/or a text associated with the multimodal prompt information; wherein N is a positive integer; and
an output unit (1202) configured to output the target inference result.

14. A non-transitory computer-readable storage medium storing a computer instruction thereon, wherein the computer instruction is used to cause a computer to execute the method of any one of claims 1 to 11.

15. A computer program product comprising a computer program, wherein the computer program implements the method of any one of claims 1 to 11, when executed by a processor.
